# EUROPÄISCHE PATENTSCHRIFT

(11) **EP 1 323 521 B1**
(45) Veröffentlichungstag und Bekanntmachung des Hinweises auf die Patenterteilung: **27.08.2008**
(21) Anmeldenummer: 01130815.2
(22) Anmeldetag: 24.12.2001
(51) Int. Cl.: B32B 3/06, B32B 7/02, E04F 15/02, H05F 3/02, B29C 45/16

(54) **Harte Belagsplatte**
Hard panel
Plaque de recouvrement dure

(43) Veröffentlichungstag der Anmeldung: 02.07.2003
(73) Patentinhaber: FORBO-GIUBIASCO SA, 6512 Giubiasco (CH)
(72) Erfinder: Käppeli, Simon, 6702 Claro (CH); Ghilardi, Aris, 6645 Brione/Sopra Minusio (CH)
(74) Vertreter: Schaad, Balass, Menzl & Partner AG

(56) Entgegenhaltungen:
- EP-A- 1 128 713
- WO-A-00/17467
- DE-A- 3 116 507
- FR-A- 2 675 078
- GB-A- 303 324
- US-A- 2 189 218

## Beschreibung

Die Erfindung betrifft eine harte Belagsplatte gemäss den Merkmalen des Oberbegriffes des Anspruches 1 und eine Belagsfläche aus solchen Belagsplatten. An Belagsflächen aus Kunststoff werden heute sehr hohe Ansprüche in Bezug auf mechanische Festigkeit, Verschleisswiderstand und Resistenz gegen chemische Stoffe gestellt. Zudem sollten solche Beläge keine oder nur eine äusserst geringe elektrostatische Aufladung zeigen.

Aus EP-A-1 128 713 sind Belagsplatten aus hochverdichtetem, thermoplastischem Kunststoff mit einer nicht leitenden Trägerschicht und einer leitfähigen Nutzschicht bekannt, wobei eine Nutzfläche der Nutzschicht mit einer festhaftenden, leitfähigen Substanz versehen ist. Die dort beschriebenen Belagsplatten weisen Verbindungselemente in Form von Nut und Feder auf. Das Verlegen solcher Belagsplatten kann nur durch spezialisierte Arbeiter durchgeführt werden. Die Feder-Nutverbindung reisst oft aus und überdies ist die Herstellung der Platten kompliziert und aufwendig.

FR-A-2675078 offenbart ein plastisches oder elastomeres, mehrschichtiges, plattenförmiges Produkt, welches aus mindestens zwei übereinander angeordneten Materialfolien gebildet ist.

Belagsplatten für Bodenbeläge werden im allgemeinen mittels Steckverbindungen aneinander befestigt. Die zwischen den einzelnen Belagsplatten vorhanden Fugen sind Verschmutzungen und Staub ausgeliefert. Dies kann dazu führen, dass sich die Fortsätze mit der Zeit gegen oben wölben. Dadurch ist der Bodenbelag schlechter befahrbar und weist eine verkürzte Lebenszeit auf, was aus ökonomischen und ökologischen Gründen unerwünscht ist.

Aufgabe der vorliegenden Erfindung ist es daher eine harte Belagsplatte zur Verfügung zu stellen, die so ausgestaltet ist, dass sie einfach zu verlegen ist.

Eine weitere Aufgabe der vorliegenden Erfindung ist eine Belagsfläche, die mit leichtverlegbaren Belagsplatten hergestellt wird und eine lange Lebenszeit aufweist.

Diese Aufgaben werden gelöst durch eine Belagsplatte gemäss den Merkmalen des Anspruches 1 und eine Belagsfläche gemäss den Merkmalen des Anspruches 10.

Die Nutzschicht der erfindungsgemässen Belagsplatte weist eine vieleckige Form auf und ist vorzugsweise quadratisch oder sechseckig. Die Nutzschicht weist weder Aussparungen noch Fortsätze auf. Nach dem Verlegen der erfindungsgemässen Belagsplatten sind weder Aussparungen noch Fortsätze von oben sichtbar, da die mechanische Befestigung der Belagsplatten durch die Trägerschicht erfolgt. Der Bodenbelag weist zwischen den einzelnen Belagsplatten schmale Fugen auf. Das regelmässige, vorzugsweise quadratische Muster dieser Fugen ermöglicht auch eine einfache Verschweissung, sodass allfällige Verschmutzungen den Bodenbelag nicht beeinträchtigen. Die Nutzschicht ist vorzugsweise elektrisch leitend.

Die Trägerschicht der erfindungsgemässen Belagsplatte ist im wesentlichen gleich gross wie die Nutzschicht und hat vorzugsweise ebenfalls eine vieleckige Form. Die Trägerschicht weist in ihren Randbereichen Fortsätze und gegengleiche Aussparungen auf. Der Randbereich der Trägerschicht weist eine Breite auf, die der Länge der Aussparungen und Fortsätze entspricht. Die Fortsätze sind zum formschlüssigen Eingreifen in die Aussparungen benachbarter Belagsplatten bestimmt.

Die Zwischenschicht erstreckt sich über mindestens zwei benachbarte Randbereiche der Trägerschicht und mindestens zwei weitere Randbereiche der Trägerschicht sind zwischenschichtsfrei. Beim Verlegen der erfindungsgemässen Belagsplatten führt dies dazu, dass diejenigen Fortsätze an den Randbereichen der Trägerschicht, über die sich die Zwischenschicht erstreckt, in diejenigen Aussparungen in den Randbereichen der Trägerschicht eingreifen, die zwischenschichtsfrei sind. Dadurch weist ein durch die erfindungsgemässen Belagsplatten hergestellter Belag eine kontinuierliche Zwischenschicht auf, sodass die elektrische Leitfähigkeit über die gesamte Fläche gewährleistet ist. Da die Stelle der mechanischen Verbindung nicht unmittelbar am gleichen Ort ist, wie die elektrische Verbindung, führt dies dazu, dass leichte örtliche Verschiebungen benachbarter Belagsplatten nicht zu einem Unterbruch der Leitfähigkeit führen und daher eine hohe Sicherheit in Bezug auf die elektrische Leitfähigkeit gewährleistet.

In einer weiteren Ausführungsform erstreckt sich die Zwischenschicht über mindestens zwei benachbarte Randbereiche der Trägerschicht und über die Fortsätze der Trägerschicht zweier weiterer benachbarter Randbereiche. Dies führt dazu, dass in denjenigen Bereichen, in denen die Platten aneinander befestigt sind, die Zwischenschicht verdoppelt ist. Damit genügt ein so hergestellter Bodenbelag den hohen Anforderungen bezüglich der elektrischen Leitfähigkeit.

Die erfindungsgemässen Belagsplatten können auch auf unebenen Unterlagsboden verlegt werden, ohne dass die Ableitung der entstandenen elektrostatischen Ladungen beeinträchtigt wird. Die Verlegung der erfindungsgemässen Belagsplatten findet ohne feste Verbindung mit dem Unterlagsboden statt.

Die erfindungsgemässen Belagsplatten sind in ihrer Herstellung sehr günstig, da nur die Nutzschicht den besonderen Erfordernissen bezüglich der elektrischen Leitfähigkeit, der Verschleissfähigkeit und der Beständigkeit gegen aggressive Chemikalien genügen muss. Die Zwischenschicht muss elektrisch leitfähig sein.

Je nach Anforderungen können bei der Trägerschicht preiswerte Materialien eingesetzt werden, wie zum Beispiel Regenerate.

Die Nutzschicht der erfindungsgemässen Belagsplatte wird vorzugsweise hergestellt aus Teilchen aus thermoplastischem Kunststoff, meistens sogenannte Chips oder Schnitzel, die vor dem Verpressen mit einem leitfähigen Überzug versehen werden. Beim Verpressen bei erhöhter Temperatur werden die Kunststoffteilchen zusammen mit dem leitfähigen Überzug stark verformt und ergeben einen homogenen Block, der von gleichmässig verteilten dünnen leitfähigen Schichten durchsetzt ist. In einer besonders bevorzugten Ausführungsform weist die Nutzschicht an der Unterseite einen Netzaufdruck auf, der die Leitfähigkeit zwischen Nutzschicht und Zwischenschicht erhöht (siehe auch EP 0 869 217).

Besonders vorteilhaft weisen die Fortsätze eine Schwalbenschwanz-artige Form auf, da so das Verlegen der Belagsplatten zu einer Belagsfläche und auch die Demontage einer solchen Belagsfläche besonders einfach ist, ohne dass die elektrische Leitfähigkeit zwischen den Belagsplatten beeinträchtigt wird. Die Schwalbenschwanzartigen Aussparungen können sowohl eckig als auch hinterschnitten sein. In einer Ausführungsform wechseln sich schmale und breite Fortsätze bzw. Aussparungen regelmässig ab. Form und Breite der Schwalbenschwänze können den Anwendungserfordernissen angepasst werden, insbesondere muss den Radien die nötige Aufmerksamkeit geschenkt werden.

Die elektrische Ladung wird vorzugsweise über die Ränder der mit den erfindungsgemässen Belagsplatten hergestellten Belagsfläche abgeführt.

Die Zwischenschicht der erfindungsgemässen Belagsplatten ist ein elektrisch leitfähiges Flächengebilde. Dies kann beispielsweise ein Metallnetz, ein leitfähiges Gewebemuster oder Kupferbänder sein, aber auch eine leitfähige Folie oder eine leitfähige Lackschicht. Besonders bevorzugt sind Polystyrol-Folien mit einem Russzusatz und weiche Polyvinylchlorid-Folien mit einem Russzusatz.

Polystyrolfolien können durch Russzusätze leitfähig gemacht werden. Diese Folien weisen vorzugsweise einen Russgehalt von 15 bis 25%, vorzugsweise 18 bis 22% auf. Vorzugsweise wird Polystyrolfolie oder eine PVC-Folie mit einer Stärke von 150 bis 250 µm, vorzugsweise 200 bis 250 µm eingesetzt. Zur Herstellung dieser Folien können Verbindungen in Granulatform wie beispielsweise CABELEC® 3896 der Firma Cabot, eingesetzt werden. Ein solches Granulat hat unter anderem folgende Eigenschaften:

| | |
|---|---|
| Dichte | 1.098 kg/l |
| Shore-D-Härte | 75 |
| VICAT-Erweichungspunkt (10 N) | 118°C |
| Schmelzindex (200°C/10kg) | 2.5g/10 min |
| Spezifischen Durchgangswiderstand | 10² Ω/cm |
| Biegemodul | 1800 MPa |

Die daraus hergestellte Folie von 200 µm Dicke weist einen elektrischen Durchgangswiderstand nach DIN 51953 von ca. 10⁴ Ω auf.

Der Lack kann ganzflächig oder auch in definierten Mustern auf die Nutzschicht aufgetragen werden. Dadurch ist es möglich, der Zwischenschicht einen definierten Durchgangswiderstand zu geben. Ein solcher Lack kann beispielsweise die folgenden Zusammensetzungen aufweisen:

| | |
|---|---|
| a) | 18% Bindemittel auf Basis Vinylacetat-Vinylchlorid, |
| | 21% Graphit, |
| | 1% NH₃, |
| | 60% Wasser |
| | |
| b) | 27% Graphit, |
| | 73% Wasser |
| | |
| c) | 25% Graphit, |
| | 5% Weizenquellstärke, |
| | 70% Wasser |
| | |
| d) | 3% Russ, |
| | 75% Vinylacetat-Vinylchlorid Bindemittel, |
| | 16% Wasser, |
| | 6% filmbildende und haftvermittelnde Lösungsmittel |
| | |
| e) | 36% PU-Dispersion, |
| | 4% Acryldispersion, 6% Glykole, |
| | 1% Additive, |
| | 4% einer leitfähigen Substanz wie z.B. Russ, |
| | 49% Wasser. |

Die Graphitteilchen in den Graphitsuspensionen haben dabei eine Korngrösse zwischen 1 µm und 100 µm, vorzugsweise von 1µm bis 30 µm. Als besonders vorteilhaft haben sich Suspensionen mit Graphitteilchen einer Grösse von 3 µm bis 10 µm herausgestellt. Für russenthaltenden Suspensionen haben sich Russpartikel mit grosser aktiver Oberfläche, vorzugsweise zwischen 500 m²/gr und 1500 m²/gr als günstig erwiesen. Der Lack muss so auf die Nutzschicht aufgetragen werden, dass er eine zusammenhängende Schicht von einigen Mikrometern Dicke ausbildet.

In einer weiteren Ausführungsform wird die Tragfähigkeit der Trägerschicht erhöht, indem die Trägerschicht druckelastische Eigenschaften aufweist. Beispielsweise kann die Trägerschicht mindestens zur Hälfte eine Vieleckstruktur, wie zum Beispiel eine Bienenwabenstruktur aufweisen. Durch die Ausnehmungen in den Randbereichen der Vieleckstrukturen wird die Entlüftung des Unterlagsboden verbessert, was insbesondere in feuchten Räumen bevorzugt ist.

Die erfindungsgemässe Belagsplatte wird vorzugsweise so hergestellt, dass auf die vorgelegte Nutzschicht, die Zwischenschicht aufgebracht wird. Dies kann entweder durch Aufbringen der Folie geschehen oder durch das Auftragen eines Lackes. Auf die auf die Nutzschicht aufgebrachte Zwischenschicht wird in einem abschliessenden Schritt die Trägerschicht, vorzugsweise mittels Spritzgussverfahren, aufgebracht.

Die Trägerschicht wird vorzugsweise aus einem Regenerat hergestellt, beispielsweise der folgenden Zusammensetzung:

| | |
|---|---|
| PVC (Suspensionsqualität) | 38-42% |
| Weichmacher (Phthalsäureester) | 12 -14% |
| Inertstoffe (Kreide, Pigmente) | 40-44% |
| Thermostabilisator | 2.5 bis 3.5% |
| Verarbeitungshilfsmittel | 0 bis 1%. |

Diese Rezeptur ergibt Shore-D-Härten von 65 bis 70. Die Trägerschicht weist vorzugsweise eine Dicke von 5 bis 7 mm, besonders bevorzugt von 6 mm auf.

Ein mit den erfindungsgemässen Belagsplatten hergestellter Bodenbelag ist auch mit hohem Gewicht belastbar und befahrbar.

Die Ausgestaltung der Belagsplatten kann mit der Methode der finiten Elementen errechnet werden:

Eine Belagsplatte, die mit einem Gabelstapler befahren wird, sollte beispielsweise den folgenden Anforderungen genügen

| | |
|---|---|
| Gewicht | 10t |
| Geschwindigkeit | 25 km/h |
| Bremsweg | 15 m |
| Auflagefläche | 600 cm² |
| E-Modul | 500 MPa |

was eine notwendige Kraft von 16'000 N ergibt.

Bei einem Reibungskoeffizient von 0.5 und einer symmetrischen Kraftverteilung beträgt die Kraft pro Auflagefläche 2000 N.

| Anzahl Verbindungen pro Seite | E-Modul (MPa) | Kraft (N) | Deformation (mm) | Spannung (N/mm) | Zugfestigkeit (MPa) |
|---|---|---|---|---|---|
| 4 | 500 | 2000 | 3.7 | 37 | 18 |
| 8 | 500 | 2000 | 2.2 | 20 | 18 |
| 16 | 500 | 2000 | 1.4 | 15.3 | 18 |

Soll der Bodenbelag einer solchen Belastung genügen, sollte mit 16 Verbindungen pro Seite gerechnet werden, dies bedeutet eine Kombination von 8 Fortsätzen und 8 Aussparungen pro Seite der Trägerschicht der erfindungsgemässen Belagsplatte. Bei einer geringeren Anzahl Verbindungen reduziert sich die maximale Belastbarkeit entsprechend.

Weitere bevorzugte Ausführungsformen sind Gegenstand weiterer abhängiger Ansprüche.

Im weiteren wird anhand der Figuren 1-9 der Gegenstand der Erfindung beispielhaft erklärt. Es zeigen rein schematisch
- Figur 1: eine Gesamtansicht der erfindungsgemässen Belagsplatte von unten;
- Figuren 2a und 2b: je eine Explosionszeichnung der schematisch dargestellten Trägerschicht, Zwischenschicht und Nutzschicht der Belagsplatte;
- Figur 3: eine Gesamtansicht der erfindungsgemässen Belagsplatte von oben;
- Figur 4: einen Ausschnitt der Belagsplatte mit den Aussparungen und Fortsätzen von unten;
- Figur 5: eine schematische Darstellung der Trägerschicht und der Zwischenschicht;
- Figuren 6a und 6b: eine schematische Darstellung der Trägerschicht von oben bzw. von der Seite;
- Figur 7: eine schematische Darstellung der Trägerschicht von oben;
- Figuren 8 und 9: je eine Gesamtansicht einer bevorzugten Ausführungsform.

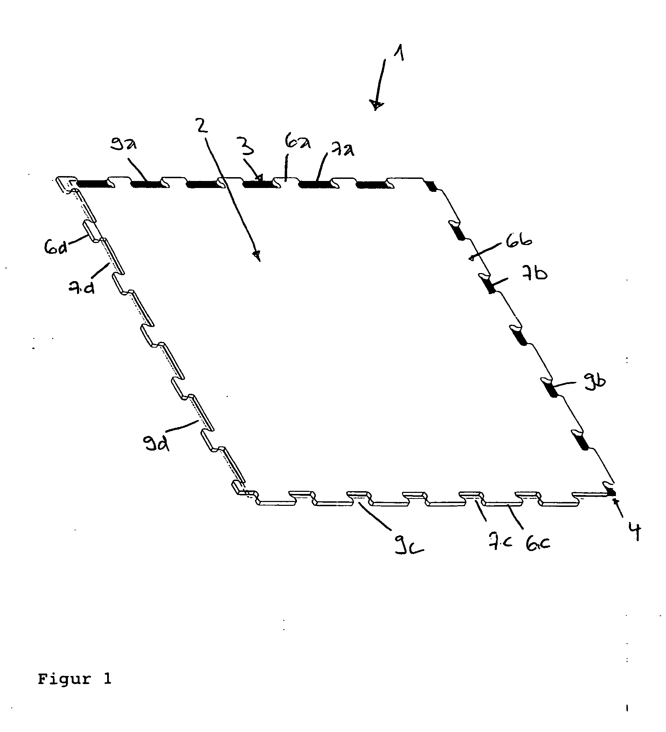

Figur 1 zeigt die Belagsplatte 1 von unten mit einer isolierenden Trägerschicht 2, einer elektrisch leitfähigen Zwischenschicht 3 und einer elektrisch leitfähigen Nutzschicht 4. Die Nutzschicht 4 ist aus einem hochverdichteten, thermoplastischen Kunststoff. Selbstverständlich kann die Nutzschicht aber auch aus anderen Materialien sein. Die zwischen Trägerschicht 2 und Nutzschicht 4 liegende Zwischenschicht 3 ist fest mit den beiden verbunden. In ihrem Randbereich 9a, 9b, 9c und 9d weist die Trägerschicht 2 einstückig ausgeformte Fortsätze 6a, 6b, 6c und 6d und Aussparungen 7a, 7b, 7c und 7d auf, wobei die Fortsätze 6a, 6b, 6c und 6d zum formschlüssigen Eingreifen in die Aussparungen 7c, 7d, 7a und 7b benachbarter Belagsplatten bestimmt sind.

Die Fortsätze 6a und 6c sind in dieser Ausführungsform schmaler als die Fortsätze 6b und 6d. Jede beliebige Breite der Fortsätze und Aussparungen ist jedoch möglich. Bevorzugt sind beispielsweise Varianten in denen die Fortsätze und Aussparungen die gleiche Breite haben oder die Fortsätze alternierend unterschiedliche Breiten aufweisen.

Die Zwischenschicht 3 erstreckt sich über zwei benachbarte Randbereiche 9a und 9b der Trägerschicht. Die zwei weiteren den Randbereichen 9a und 9b gegenüberliegenden ebenfalls benachbarten Randbereiche 9c und 9d der Trägerschicht 2 sind zwischenschichtsfrei.

Die erfindungsgemässe Belagsplatte ist somit so ausgestaltet, dass die sich in den Randbereichen 9a und 9b befindenden Fortsätze 6a und 6b zum formschlüssigen Eingreifen in die Aussparungen 7c und 7d benachbarter Belagsplatten bestimmt sind, sodass sich die Zwischenschicht kontinuierlich über den gesamten Belag erstreckt. Da die mechanische Verbindung zweier Belagsplatten nicht am gleichen Ort ist, wie die elektrische Verbindung führt dies dazu, dass leichte Verschiebungen der Belagsplatten innerhalb der Belagsfläche nicht zu einem Unterbruch der elektrischen Leitfähigkeit führt.

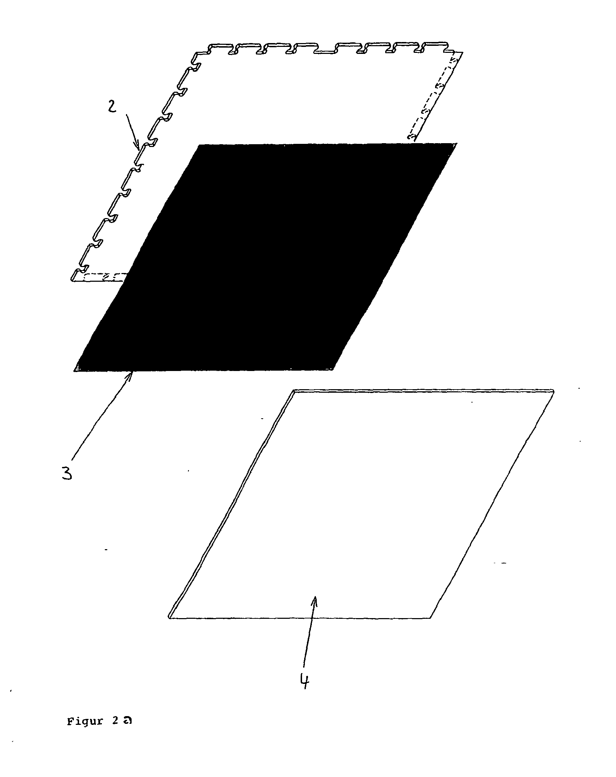

Figur 2a zeigt schematisch die Trägerschicht 2, die Zwischenschicht 3 und die Nutzschicht 4 die dazu bestimmt sind miteinander fest verbunden zu werden. In der hier gezeigten bevorzugten Ausführungsform haben die Zwischenschicht 3 und die Nutzschicht 4 die gleiche Grösse und sind vollflächig übereinander angebracht.

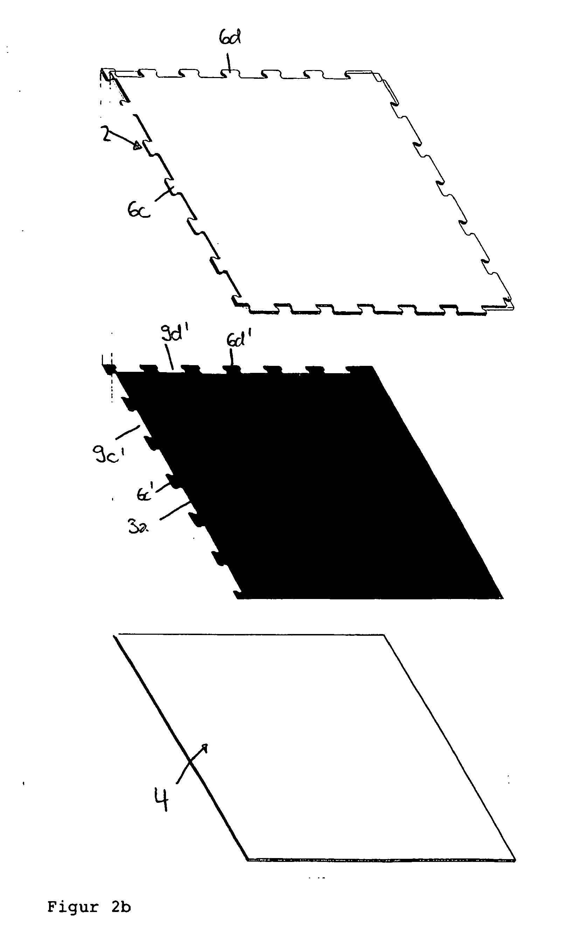

Figur 2b zeigt schematisch die Trägerschicht 2, die Zwischenschicht 3a und die Nutzschicht 4 die dazu bestimmt sind miteinander fest verbunden zu werden. In der hier gezeigten bevorzugten Ausführungsform weist die Zwischenschicht 3a in den Randbereichen 9c' und 9d' Fortsätze 6c' und 6d' auf, die dazu bestimmt sind, die Fortsätze 6c und 6d der Trägerschicht 2 zu überdecken. Die Nutzschicht 4, die Zwischenschicht 3a und die Trägerschicht 2 haben im wesentlichen die gleiche Grösse.

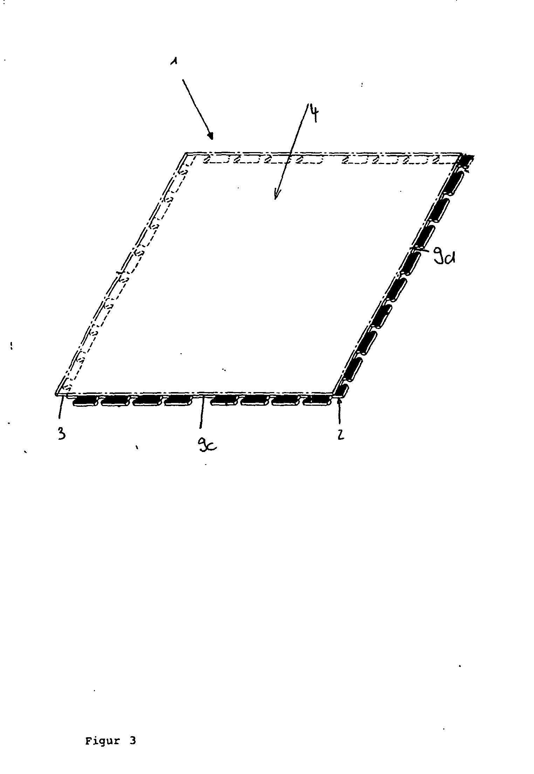

Figur 3 zeigt die Belagsplatte 1 von oben mit einer isolierenden Trägerschicht 2, einer elektrisch leitfähigen Zwischenschicht 3 und einer elektrisch leitfähigen Nutzschicht 4. Die Randbereiche 9c und 9d sind zwischenschichtsfrei.

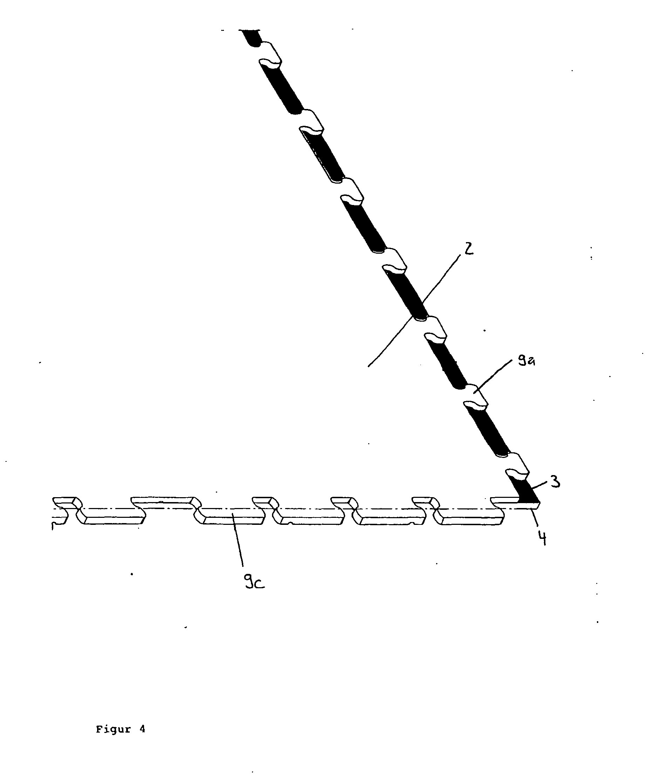

Figur 4 zeigt einen Ausschnitt der erfindungsgemässen Belagsplatte. Die auf die Nutzschicht 4 aufgebrachte Zwischenschicht 3 erstreckt sich über den Randbereich 9a der Trägerschicht 2, während der Randbereich 9c der Trägerschicht 2 zwischenschichtsfrei bleibt.

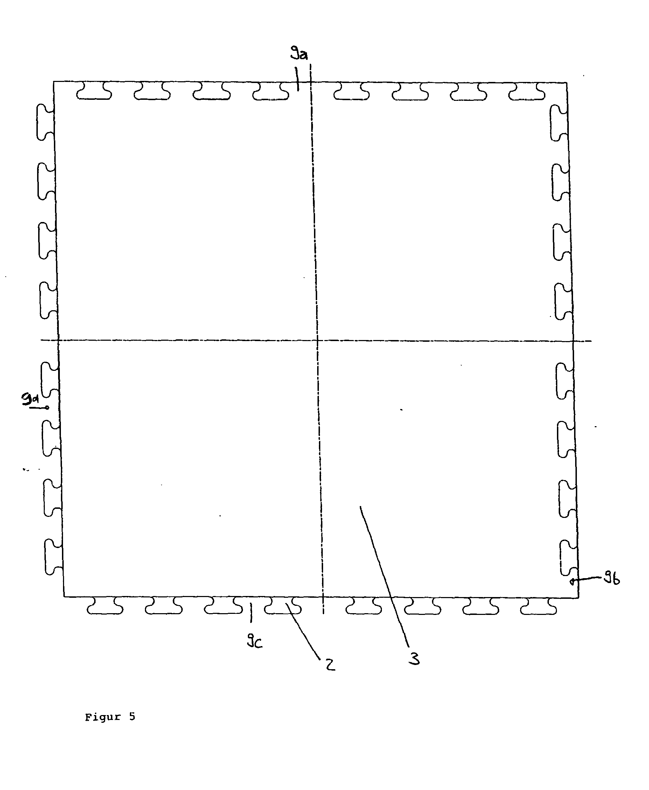

Figur 5 zeigt die schematische Ansicht der Trägerschicht 2 und der Zwischenschicht 3. Die Zwischenschicht erstreckt sich über die Randbereiche 9a und 9b der Trägerschicht 2, während die Randbereiche 9c und 9d der Trägerschicht 2 zwischenschichtsfrei bleiben.

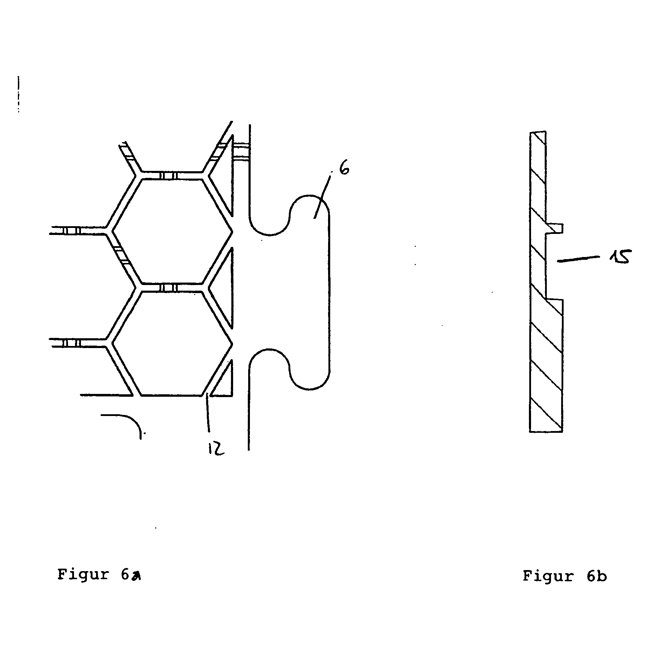

Figur 6a zeigt einen Ausschnitt einer bevorzugten Trägerschicht 2a. Die Trägerschicht 2a weist eine sechseckige Form auf, d.h. eine Bienenwabenstruktur. Das Sechseck ist durch schmale Fugen 12 begrenzt. Die Fortsätze schliessen unmittelbar an die Sechseckstruktur an. Durch die Bienenwabenstruktur wird die Tragfähigkeit der Trägerschicht erhöht, was sie besonders geeignet für eine Verwendung für Industrieböden macht.

Figur 6b zeigt die Seitenansicht einer unter 6a gezeigten Trägerschicht 2a von der Seite. Die Trägerschicht kann Aussparungen 15 aufweisen. Durch diese Aussparungen wird die Entlüftung des Unterlagsboden verbessert. Die Aussparungen 15 können regelmässig oder unregelmässig über die ganze Trägerschicht verteilt sein.

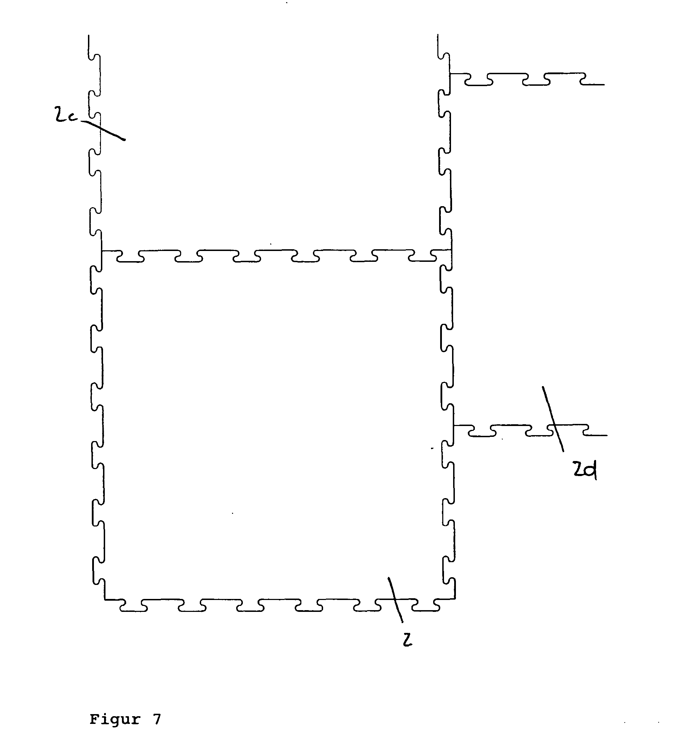

Figur 7 zeigt eine Trägerschicht 2 von oben. Die benachbarte Trägerschichten 2c ist bündig zu der Trägerschicht 2 angeordnet, während die Trägerschicht 2d mit der Hälfte der Trägerschicht 2 verbunden ist. Diese Art der Verlegung ermöglicht eine bessere Lastverteilung.

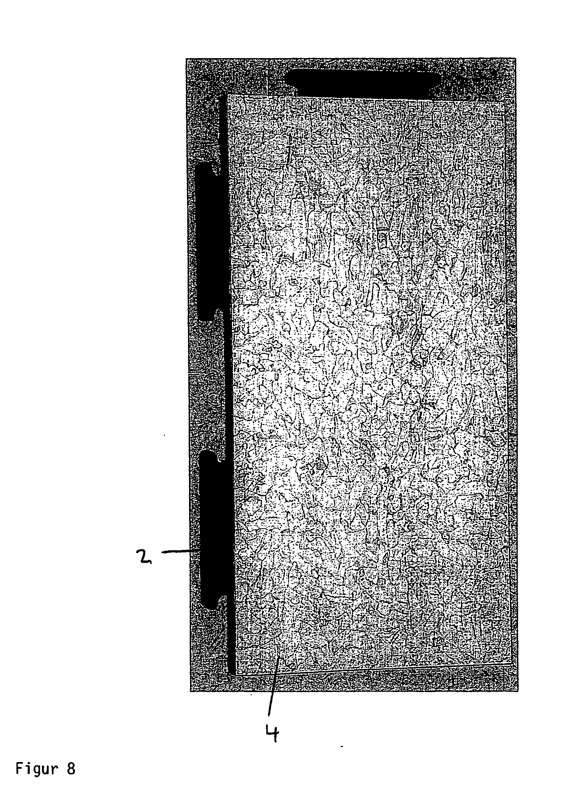

Die Figur 8 zeigt eine Ausführungsform der erfindungsgemässen Belagsplatten von oben. Die elektrisch leitfähige Nutzschicht 4 hat in dieser bevorzugten Ausführungsform neben den definierten elektrischen und mechanischen Eigenschaften auch eine durch Russ oder Graphiteinlagerungen verursachte Musterung, die zugleich als Dekorschicht dient.

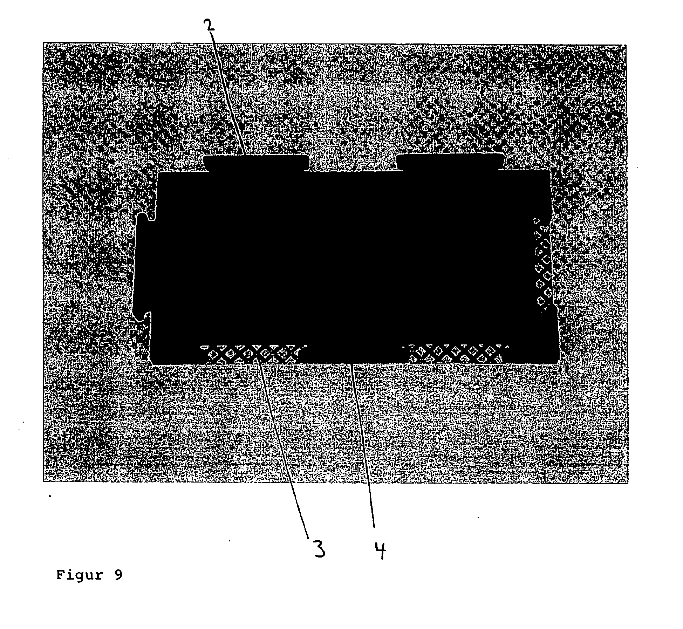

Figur 9 zeigt die in Figur 7 gezeigte Ausführungsform von unten. Ein auf der Nutzschicht 3 aufgebrachtes zusätzliches netzartiges Druckmuster aus einer leitfähigen Substanz vermag die elektrische Leitfähigkeit der erfindungsgemässen Belagsplatte weiter zu erhöhen.

## Patentansprüche

1. Harte Belagsplatte mit einer Trägerschicht und einer Nutzschicht, wobei die Nutzschicht und die Trägerschicht eine vieleckige Form aufweisen und die Randbereiche der Trägerschicht Fortsätze und Aussparungen aufweisen, wobei die Fortsätze zum formschlüssigen Eingreifen in die Aussparungen der Trägerschicht benachbarter Belagsplatten bestimmt sind, und die Belagsplatte mit einer zusätzlichen zwischen. Trägerschicht und Nutzschicht angeordneten leitfähigen Zwischenschicht versehen ist, wobei die Zwischenschicht mit beiden fest verbunden ist, **dadurch gekennzeichnet, dass**
die Zwischenschicht sich über mindestens zwei benachbarte Randbereiche der Trägerschicht erstreckt und die Fortsätze mindestens zweier Randbereiche der Trägerschicht zwischenschichtfrei sind.

2. Harte Belagsplatte gemäss Anspruch 1, **dadurch gekennzeichnet, dass** die Nutzschicht leitfähig ist.

3. Harte Belagsplatte gemäss Anspruch 1 oder 2, **dadurch gekennzeichnet, dass** die Nutzschicht und die Zwischenschicht vollflächig übereinander liegen.

4. Harte Belagsplatte gemäss einem der Ansprüche 1 bis 3, **dadurch gekennzeichnet, dass** die Zwischenschicht ein leitfähiges Flächengebilde ist.

5. Harte Belagsplatte nach Anspruch 4, **dadurch gekennzeichnet, dass** das leitfähige Flächengebilde eine Folie oder eine Lackschicht ist.

6. Harte Belagsplatte nach Anspruch 5, wobei die Folie eine Polystyrolfolie mit Russzusatz, eine weiche Polyvinylchloridfolie mit Russzusatz ist.

7. Harte Belagsplatte nach einem der vorangehenden Ansprüche, **dadurch gekennzeichnet, dass** die Fortsätze eine Schwalbenschwanz-artige Form aufweisen.

8. Harte Belagsplatte nach einem der vorangehenden Ansprüche, **dadurch gekennzeichnet, dass** die Trägerschicht elektrisch isolierend ist.

9. Harte Belagsplatte nach einem der vorangehenden Ansprüche, **dadurch gekennzeichnet, dass** die Nutzschicht eine Dekorschicht ist.

10. Harte Belagsfläche hergestellt mit Belagsplatten gemäss einem der vorangehenden Ansprüche, wobei nur die Nutzschicht von oben sichtbar ist.

11. Verfahren zur Herstellung von harten Belagsplatten gemäss einem der Ansprüche 1 bis 9, **dadurch gekennzeichnet, dass**
die Nutzschicht vorgelegt wird,
die Zwischenschicht auf die Nutzschicht aufgebracht wird, und die
Trägerschicht auf die Zwischenschicht mittels Spritzgussverfahren aufgebracht wird,
wobei ein dreischichtiges Gebilde resultiert.

## Claims

1. Hard tile, having a support layer and a wearing layer, wherein the wearing layer and the support layer are polygonal in shape and the edge regions of the support layer have projections and cutouts, the projections being intended to engage in a positively locking manner in the cutouts in the support layer of adjacent tiles,
and the tile being provided with an additional conductive intermediate layer arranged between support layer and wearing layer, the intermediate layer being fixedly joined to both, **characterized in that**
the intermediate layer extends over at least two adjacent edge regions of the support layer, and the projections of at least two edge regions of the support layer are free of the intermediate layer.

2. Hard tile according to Claim 1, **characterized in that** the wearing layer is conductive.

3. Hard tile according to Claim 1 or 2, **characterized in that** the wearing layer and the intermediate layer lie one above the other over the entire surface area.

4. Hard tile according to one of Claims 1 to 3, **characterized in that** the intermediate layer is a conductive sheet-like structure.

5. Hard tile according to Claim 4, **characterized in that** the conductive sheet-like structure is a film or a coating layer.

6. Hard tile according to Claim 5, in which the film is a polystyrene film with added carbon black, a soft polyvinyl chloride film with added carbon black.

7. Hard tile according to one of the preceding claims, **characterized in that** the projections have a dovetail-like shape.

8. Hard tile according to one of the preceding claims, **characterized in that** the support layer is electrically insulating.

9. Hard tile according to one of the preceding claims, **characterized in that** the wearing layer is a decorative layer.

10. Hard covering surface produced using tiles according to one of the preceding claims, in which only the wearing layer is visible from above.

11. Process for producing hard tiles according to one of Claims 1 to 9, **characterized in that**
the wearing layer is laid down
the intermediate layer is applied to the wearing layer, and
the support layer is applied to the intermediate layer by means of injection molding,
resulting in a three-layer structure

## Revendications

1. Plaque rigide de recouvrement qui présente une couche de support et une couche d'usure, la couche d'usure et la couche de support ayant une forme polygonale et les bordures de la couche de support présentant des prolongements et des découpes, les prolongements étant définis de manière à s'engager en correspondance géométrique dans les découpes de la couche de support de plaques de recouvrement voisine, et la plaque de recouvrement étant dotée d'une couche intermédiaire conductrice supplémentaire disposée entre la couche de support et la couche d'usure, la couche intermédiaire étant reliée solidairement aux deux autres,
**caractérisée en ce que**
la couche intermédiaire s'étend au-dessus d'au moins deux bordures voisines de la couche de support et les prolongements d'au moins deux bordures de la couche de support sont exempts de couches intermédiaires.

2. Plaque rigide de recouvrement selon la revendication 1, **caractérisée en ce que** la couche d'usure est conductrice.

3. Plaque rigide de recouvrement selon les revendications 1 ou 2, **caractérisée en ce que** la couche d'usure et la couche intermédiaire sont superposées l'une à l'autre sur toute leur surface.

4. Plaque rigide de recouvrement selon l'une des revendications 1 à 3, **caractérisée en ce que** la couche intermédiaire est un produit plat conducteur.

5. Plaque rigide de recouvrement selon la revendication 4, **caractérisée en ce que** le produit plat conducteur est une feuille ou une couche de vernis.

6. Plaque rigide de recouvrement selon la revendication 5, dans laquelle la feuille est une feuille de polystyrène additionné de noir de carbone, ou une feuille de poly(chlorure de vinyle) additionné de noir de carbone.

7. Plaque rigide de recouvrement selon l'une des revendications précédentes, **caractérisée en ce que** les prolongements sont configurés en queue d'aronde.

8. Plaque rigide de recouvrement selon l'une des revendications précédentes, **caractérisée en ce que** la couche de support est électriquement isolante.

9. Plaque rigide de recouvrement selon l'une des revendications précédentes, **caractérisée en ce que** la couche d'usure est une couche décorative.

10. Plaque rigide de recouvrement réalisée avec des plaques de recouvrement selon l'une des revendications précédentes et dont seule la couche d'usure est visible depuis le haut.

11. Procédé de fabrication de plaques rigides de recouvrement selon l'une des revendications 1 à 9,
**caractérisé en ce que**
on prépare la couche d'usure,
on applique la couche intermédiaire sur la couche d'usure et
on applique la couche de support sur la couche intermédiaire par un procédé de moulage par injection,
ce qui fournit un produit en trois couches.
